Europäisches Patentamt

(19) European Patent Office

Office européen des brevets

(11) Publication number: **0 094 649**
**A2**

(12) # EUROPEAN PATENT APPLICATION

(21) Application number: **83104754.3**

(22) Date of filing: **13.05.83**

(51) Int. Cl.³: **B 62 K 25/02**

(30) Priority: **13.05.82 IT 720982**
**13.10.82 IT 2372582**

(43) Date of publication of application:
**23.11.83 Bulletin 83/47**

(84) Designated Contracting States:
**AT BE CH DE FR GB IT LI LU NL SE**

(71) Applicant: **Gasparetto, Ugo**
**Via Statale 86**
**I-22010 S. Abbondio, Como(IT)**

(71) Applicant: **Dell'era, Ernesta**
**Via Statale 86**
**I-22010 S. Abbondio, Como(IT)**

(72) Inventor: **Gasparetto, Ugo**
**Via Statale 86**
**I-22010 S. Abbondio, Como(IT)**

(72) Inventor: **Dell'era, Ernesta**
**Via Statale 86**
**I-22010 S. Abbondio, Como(IT)**

(74) Representative: **Riccardi, Sergio**
**Riccardi & Co. Via Macedonio Melloni, 32**
**I-20129 Milano(IT)**

(54) System of mounting the rear wheel on a bicycle frame.

(57) The system of mounting the rear wheel of a bicycle of
the present invention consists of a device adapted to connect
in a quick and precise way said rear wheel and the frame
fork, without being obliged however to disconnect the chain
nor the speed-charge pinion unit from the freewheel of
speed-change gearing, said members remaining always
fixed to the bicycle frame, so that the operation of connecting
or removing the wheel may be easily effected by a single
person.

Fig. 9

Croydon Printing Company Ltd.

EP 0 094 649 A2

- 1 -

"SYSTEM OF MOUNTING THE REAR WHEEL ON A BICYCLE FRAME"

The present invention relates to a system for an easy and quick mounting of the rear wheel on the frame of a bicycle.

It is known that engagement and disengagement of the rear wheel of a bicycle is presently possible only if the user has a certain skill, as the pinion unit of the speed-change gearing is fixed to the wheel hub.

In order to effect this operation it is indeed necessary first of all to disengage the chain from the crown gear fixed to the pedal crank, so as to be allowed to extract the speed-change pinion unit.

This makes said operation almost impossible for unskilled users, especially when they are alone, in those rather frequent events of replacing or repairing air tubes or tires which are well known to be delicate and subject to wreck. It has not to be overlooked the fact that the above mentioned operation not only is rather difficult, but involves also the risk of reassembling the parts in a wrong way with the consequent possible damage of the components of the bicycle transmission.

In cycle races, it is decisive a very reduced time for replacing the rear wheel in case of damage or puncture, which is now possible only with the intervention of two assistants.

According to the present invention, the system comprises a pinion unit being part of the speed-change gearing, which is fixed to the frame fork and after its initial assembly will be never removed; inside said unit a slidable pin is precisely fitted, the inner end of which consisting of a cylindrical head provided with a rapid coupling slot, which after being secured to the corresponding hub pin, through a known quick lock device, allows to mount the wheel.

In order to precisely match the wheel with the pinions, both members are provided with indentations which are mutually engaged after system is locked, and have also the function of standing the stress caused by the thrust exerted on the pedals and therefore on the chain acting on said pinions.

According to another aspect of the present invention, to make easier coupling between hub and pinion unit, there is provided a pin with a threaded head (instead of the above mentioned cylindrical head) which is screwed on the corresponding seat and a notched crown with a protective ring nut, so that said pin has not to be extracted from the hub but it remains fixed thereto, thus obtaining an improved and more reliable axial coupling.

It has also to be noted thatr with the application of an adapter plate, the system may be operatively applied also to bicycles provided with a conventional fork.

The mounting system of the present invention may take many forms and several embodiments, all falling within the scope of the invention, will now be hereinafter described in detail as non limiting examples only, reference being had to the accompanying sheets of illustrative drawings, in which:

Fig. 1 is a general view of a sport bicycle, which is generally provided with multiple ratio speed-change gearing which are the subject matter of the invention;

Fig. 2 an outer view of a multiple ratio gearing after the wheel has been taken away;

Fig. 3 is an inner view of a multiple ratio gearing after the wheel has been taken away;

Fig. 4 is a view of the first embodiment of the system of the invention, in the disengaged position of fork and wheel hub;

Fig. 5 is a view of the wheel hub showing the notched part for coupling of the pinion unit;

Fig. 6 is a view of the first embodiment of the system of the invention, in a condition of engagement between wheel hub and pinion unit;

Fig. 7 is a detailed view of the notched surface of the fixed hub supporting the pinions;

Fig. 8 is an exploded view of the various components of the first embodiment of the system of the invention;

Fig. 9 is an exploded view of the components of a second embodiment of the system of the invention;

Fig. 10 is a view of the coupling and locking pins;

Fig. 11 is a view of two wheel supporting forks, suitable for applying the system of the invention;

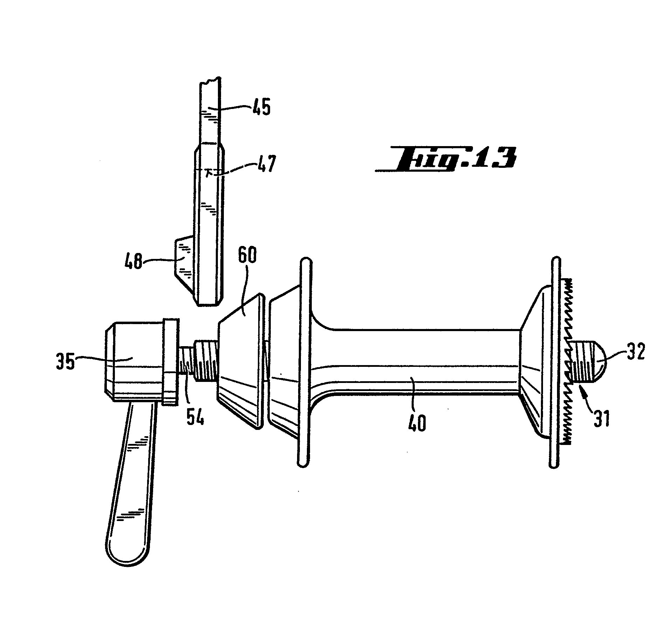

Fig. 12 is a view of a conventional fork and of the adapter plate for applying the system of the invention to existing bicycles; and

Fig. 13 is a view of another improvement adapted to make easier insertion of the fork on the hub pin.

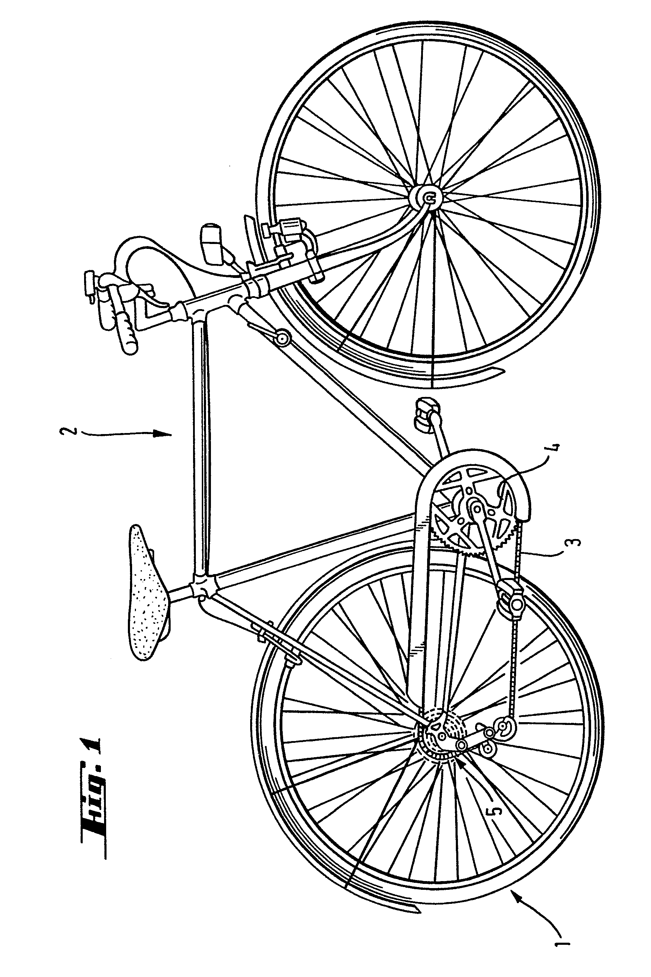

With reference now to Fig. 1 of the drawings, one can see that for demounting the rear wheel 1 of a conventional bicycle 2, first of all it is necessary to disengage chain 3 from the crown gear 4, so that only after this preliminary operation, the pinion unit 5 may be in turn disengaged from the chain to remove the wheel.

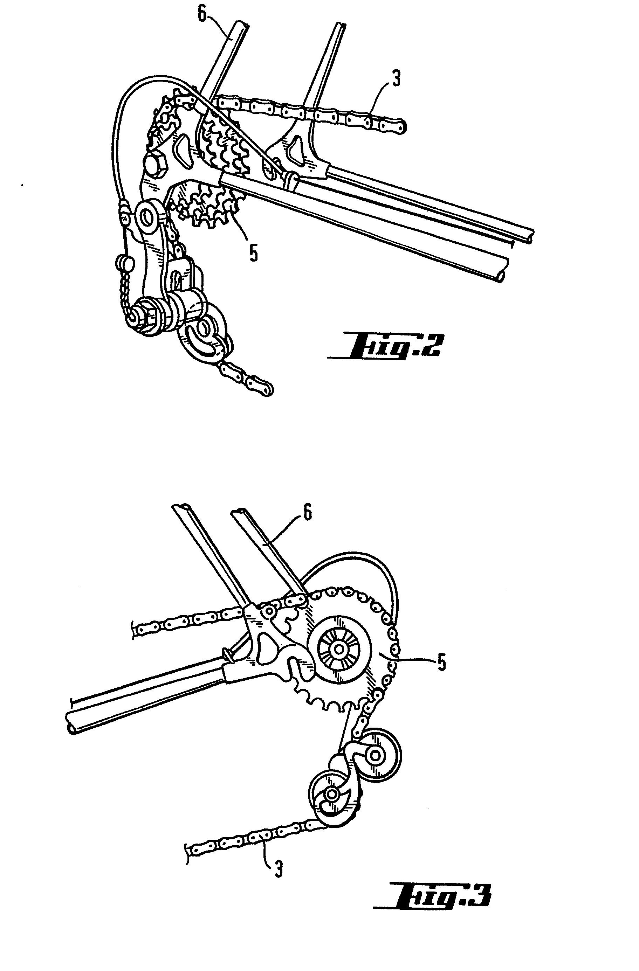

Referring to Figs. 2 and 3 one can see that with the system of the present invention, the pinion unit or freewheel 5 remains fixed to the fork 6 even after removal of the wheel, so that it is no more necessary to act on the chain and the members of the speed-change gearing.

With reference to Fig. 4, the system according to the present invention consists of a hub 7 supporting the pinions and secured through threaded members 8 and 9 to the fork 6. Inside the hub there are some sectors 10 having teeth 11 for a fixed connection with the hub 12 of the wheel. In its turn the hub 12, on the speed-change side, is provided with a ring nut 13 having an indentation 14 which engage the hub 7 supporting the pinions 5.

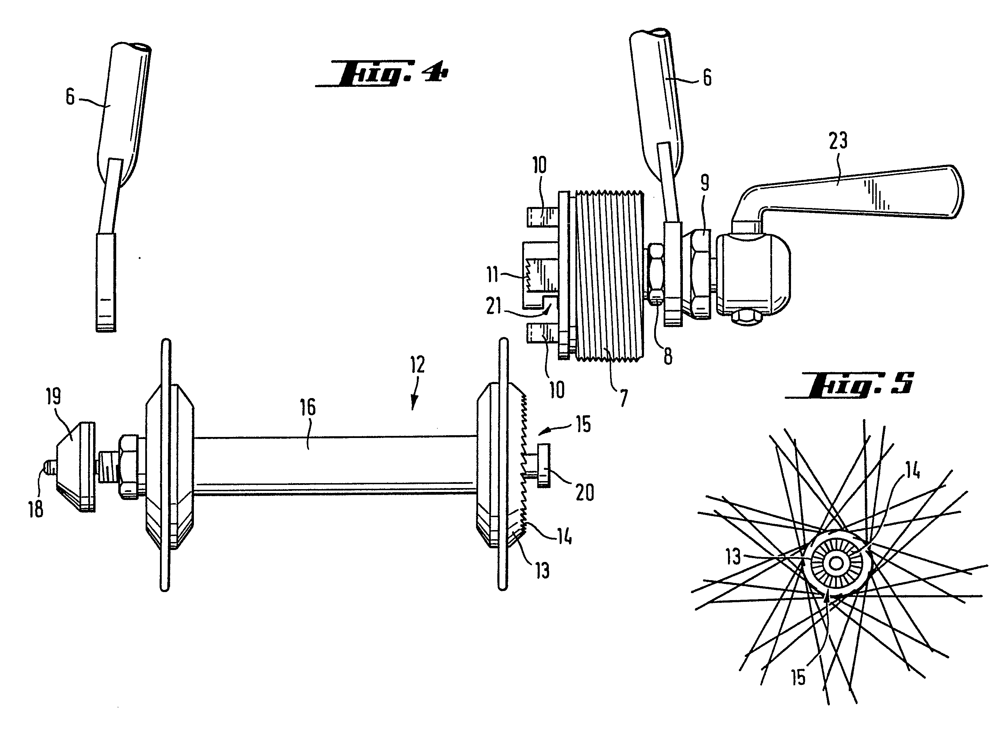

Looking now to Fig. 5, indentation 14 of the ring nut 13 forms a crown 15 unlike the pinion hub which is provided only with toothed sectors; said sectors are however to be considered as a preferred embodiment only, but the connection could also be carried out in other mechanicals ways.

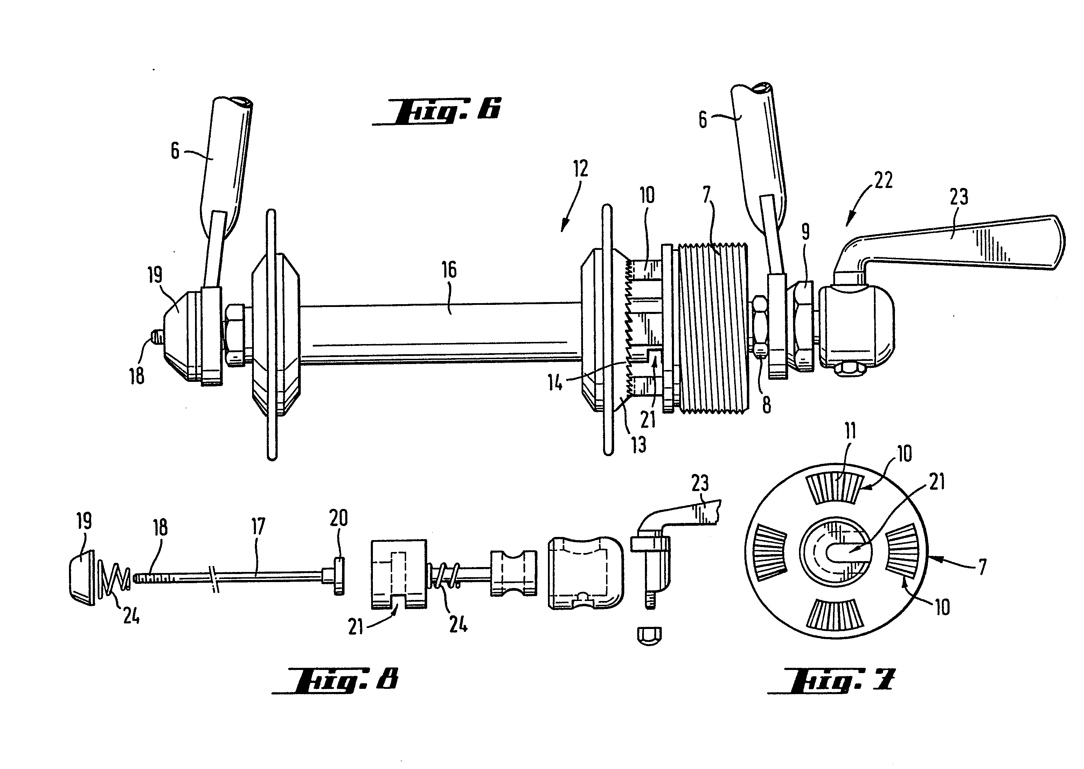

Referring to Figs. 6, 7 and 8, through axle 16 of hub 12 of the bicycle wheel, a through pin 17 is inserted, having a threaded end 18 with a corresponding abutting ring nut 19. At the other end there is a flat cylindrical head 20 which is inserted as a quick coupling in the slot 21 of the pin passing through hub 7. Such a pin projects outside at the speed-change side and by means of a known quick lock device 22, through an eccentric lever 23 or a threaded means, draws and locks the entire system of the invention.

It is to be understood that either the eccentric lever or the threaded means allow anyway to lock the hub without departing from the scope of the invention.

The system comprises also two springs 24, the one on the pinion side of the hub and the other on the wheel hub, in order to assist the mechanical disengagement of wheel and speed-change gearing.

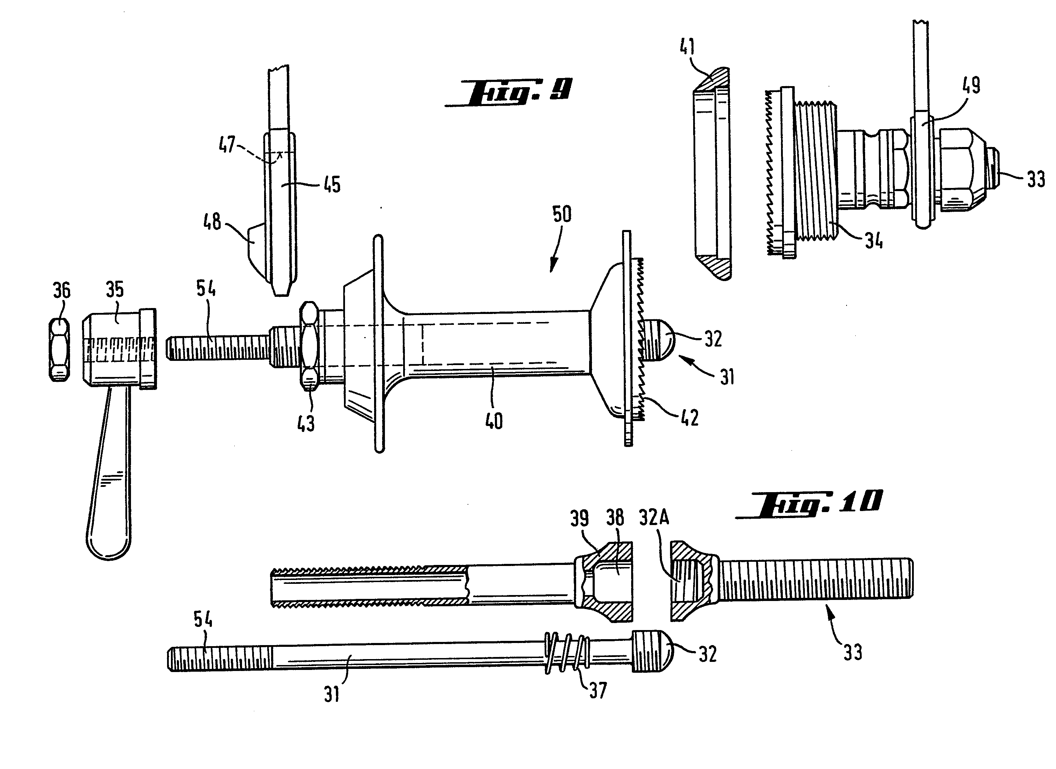

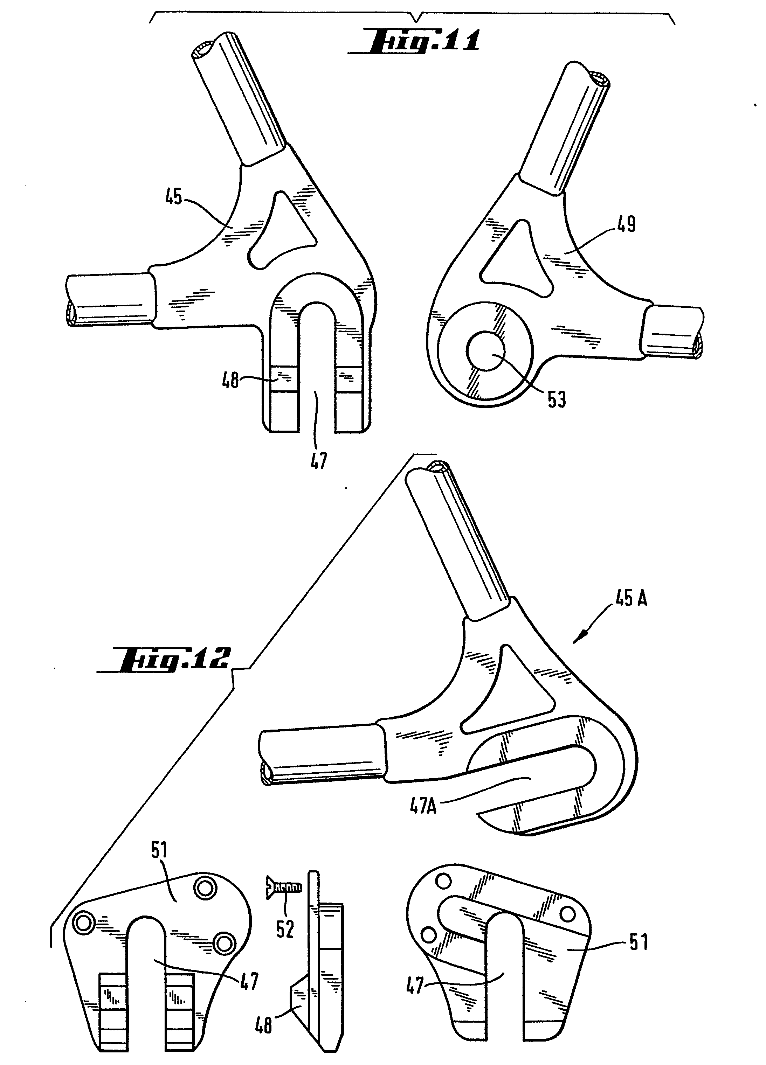

With reference now to Figs. 9, 10 and 11 one can clearly see that, in comparison with the first embodiment of the invention, in the second embodiment of the invention coupling of the wheel hub and pinion unit is effected by a central pin 31, at the end of which on the freewheel side there is a threaded head 32 which is screwed in the corresponding threaded seat 32A of solid pin 33 adapted to fix to the fork the hub 34 supporting the speed-change freewheel, said hub being actually fixed to fork 49 on the speed-change side, which is provided with a simple hole 53 for the passage of the solid pin 33.

At the opposite end the pin 31 has a threading 54 on which a quick lock wing nut 35 is screwed with an adjusting and fastening nut 36.

In order to facilitate screwing, on pin 31 is threaded a spring 37 which is seated in the corresponding recess 38 made in the tubular pin 39 passing through the hub 40 supporting the rear wheel of the bicycle, on which the central pin 31 may slide.

In order to demount the wheel, the wing nut 35 blocked on the central pin 31 by the nut 36 is loosened, thus unscrewing head 32 from seat 32A of the solid pin 33, and since on this side there is a special fork 45 provided with a vertical slot 47 open at the bottom and a cam 48, these members move the wing nut 35 and cause the threaded portion of the central pin 31 to be withdrawn and therefore the wheel to be disengaged and completely removed.

Looking at the assembled hub 50, it is clear that, in order to carry out the reverse operation of assembling the wheel, in the protection ring nut 41 the toothed crown 42

**0094649**

is inserted, centering the threaded head 32 of pin 31, then rotating the pin 31 and with the aid of the inner spring 37, the threaded head 32 is screwed and quick lock is obtained by means of the wing nut 35.

One can therefore understand that, although the technical principles of the first embodiment are maintained in the second embodiment now described, the improvements of the second embodiment of the invention are affording further operative advantages.

In order to able to apply the system of the present invention on the existing bicycles having the wheel mounted on traditional forks, according to a further improvement of the invention, it is possible to apply on the conventiona fork 45A on the side opposite to the speed-change gearing, a plate 51 having a particular shape so that the hub inserting slot 47A has a vertical arrangement and on the outside has cams 48, whose function was already explained. The application of this adapter plate 51 on the conventional fork 45A is effected very simply by traditional screws 52.

Another improvement in the mounting components of the present system consists of a conical ring nut 60, making easier insertion of the hub pin in the fork 45 provided with a vertical slot 47 and a cam 48. Such a ring nut 60 avoid that the fork stops on the hub, thus making difficult its positioning. This ring nut could also be applied to the front wheel and to the conventional hub pins, thus always facilitating mounting of the wheels, because it selfcenters them in their seat for connection to the forks.

It has to be pointed out that the detailed description of the various embodiments does not limit the scope of the invention, but on the contrary it is to be understood that many modifications, variations, additions and/or substitutions of elements may be resorted to the system of the present invention, without altering however its spirit and object, and without departing from its scope of protection.

CLAIMS

1) System of mounting the rear wheel on a bicycle frame, characterized by the fact of comprising means to effect the wheel mounting and demounting operation without disengaging the chain from the freewheel, said means being arranged between the freewheel and the wheel hub.

2) System according to Claim 1, characterized by the fact that said means are of the bajonet type, of the quick lock type or any other equivalent mechanical locking device.

3) System according to Claim 2, characterized by the fact that the freewheel supporting part remains fixed to the bicycle frame, so that the bicycle wheel is removed alone.

4) System according to Claim 2, characterized by the fact that the speed-change gearing hub and the wheel hub are connected to one another by coupling them with one or more sets of indentations, through a known quick lock pin device.

5) System according to Claim 4, characterized by the fact that the connection of the quick lock pin device between the pinion hub and wheel hub, is effected by coupling a flat cylindrical head and a cylindrical recess with insertion slot.

6) System according to Claim 2, characterized by the fact that in the quick lock connecting pins of the pinion hub and the wheel hub respectively, two springs are inserted in opposite positions, so as to facilitate disengagement of wheel and speed-change gearing in the demounting operation.

7) System according to Claim 1, characterized by the fact that said means consists of a pin sliding within the wheel hub, which can be inserted in a seet of the freewheel hub supporting the speed-charge gearing unit.

8) System according to Claim 7, characterized by the fact that the sliding pin has a threaded head and a quick lock device or equivalent mechanical locking device. **0094649**

9) System according to Claim 8, characterized by the fact that the part bearing the pinion unit remains fixed to the frame instead of the bicycle wheel, which is removed alone.

10) System according to Claim 8, characterized by the fact that the speed-change gearing hub and the wheel hub are connected each other by coupling them with a toothed crown acting also as a centering member for inserting the sliding pin in the seat of the freewheel hub.

11) System according to Claim 10, characterized by the fact that the connection of the quick lock pin device between the pinion hub and the wheel hub, is effecteu ل coupling a threaded head and a centering ring nut for the insertion of the toothed crown.

12) System according to Claim 8, characterized by the fact that a spring is inserted in the quick lock pin device, so as to facilitate threaded engagement between pin threaded head and the pinion unit.

13) System according to any of the preceding Claims, characterized by the fact the fork of the frame on the speed-change gearing side has a simple hole for the passage of the said pin of the speed-change gearing hub, while the fork on the opposite side has a vertical slot open at the bottom, provided with cams on the outer face, so as to extract the sliding pin from the screwing seat in said solid pin when the wheel is removed from its support.

14) System according to Claim 13, characterized by the fact that a conical ring nut is inserted axially on the hub so as to facilitate its insertion in the vertically slotted fork and to selfcenter the members for the coupling operation.

15) System according to Claim 13 characterized by the fact that an adapter plate

**0094649**

is provided for its application on the existing bicycles, said plate being provided with a vertical slot and the corresponding outer cams, and being applied on the forks of a

conventional bicycle frame.

0094649

**Fig. 1**

2

4

3

5

**Fig.2**

**Fig.3**

**Fig. 4.**

**Fig. 5**

# Fig. 6

# Fig. 8

# Fig. 7

**Fig. 9**

**Fig. 10**

**Fig.11**

45

49

48

47

53

**Fig.12**

45 A

47A

51

52

47

48

47

51

*Fig.13*